# EUROPÄISCHE PATENTANMELDUNG

(11) **EP 1 316 764 A1**
(43) Veröffentlichungstag der Anmeldung: **04.06.2003**
(21) Anmeldenummer: 01250418.9
(22) Anmeldetag: 28.11.2001
(51) Int. Cl.: F24J 2/20

(54) **Sonnenkollektor bzw. Absorber aus flexiblem Material**

(71) Anmelder: Kirste, Ronald, Dipl.-Ing., 13059 Berlin (DE)
(72) Erfinder: Kirste, Ronald, Dipl.-Ing., 13059 Berlin (DE)

(57) **Zusammenfassung**

Ein Kollektor bzw. Absorber besteht aus mindestens einem Metallblech und mindestens einer Metallfolie die Form-, Material-, bzw. Kraftschlüssig so miteinander Verbunden sind, daß in entsprechenden Zwischenräumen das Wärmeübertragungsmedium vom Einläß zum Auslaß fließen und sich dabei entsprechend erwärmen kann.

## Beschreibung

Der zunehmende Bedarf an Sollarkollektoren bzw. Absorbern bedingt eine Kosten- und Gewichst- Reduzierung bei solchen Apparaten.

### Kritische Wertung des Stand der Technik

### Der technische Stand im Bau von Solarkollektoren und Absorbern stellt sich wie folgt da.

Die Kollektor bzw. Absorberflächen werden aus Rohrleitungen ( in der Regel aus Kupfer) hergestellt, bei denen zum Teil durch anbringen von Platten an den Rohroberseiten die Kollekor - bzw. Absorberfläche vergrößert wird.

Andere bestehen aus Doppelwandigen - Rohren, zwischen den Rohren ist ein Vakuum.

Die Rohre werden im Gehäusekasten mit Glasabdeckungen und entsprechenden Wärmeisolationen montiert.

Diese Kollektor- und Absorberflächen haben ein hohes Eigengewicht und sind in der Herstellung teuer.

Bei den Absorbern gibt es noch eine dritte Möglichkeit, dort ist der Absorber aus einem Kunststoffschlauch der in eine Matte eingebettet ist. Diese Absorber haben den Nachteil, daß sie nur für ein geringes Temperaturgefälle genutzt werden können.

Es gibt auch einige Solarkollektoren die mit Kunststoffolien als Ummantelung (Rohrleitung) für das Wärmeübertragungsmedium arbeiten.

Diese Kollektoren sind nur für geringe Temperaturgefälle und kleine Betriebsdrücke nutzbar. Diese Kollektoren konnten sich in der Praxis nicht durchsetzen.

Die technische Blindheit zeigt sich besonders stark dadurch, daß es in den letzten Jahren nicht gelungen ist auf diesem Gebiet entsprechende Kollektoren bzw. Absorber zu erfinden bzw. zu Entwickeln.

Aufgabe dieser Erfindung ist es, die vorher genannten Mängel, insbesondere den Mangel der Einfachen Herstellung von Kollektoren bzw. Absorbern mit einem geringen Gewicht, zu beheben.

### Offenbarung

### Sonnenkollektor bzw. Absorber aus flexiblen Material

Kollektor bzw. Absorber besteht aus mindestens einem Metallblech und mindestens aus einer Metallfolie oder mindestens zwei Metallfolien, diese sind Form-, Material-, bzw. Kraftschlüssig so miteinander Verbunden, daß in entsprechenden Zwischenräumen das Wärmeübertragungsmedium vom Einlaß zum Auslaß fließen und sich dabei entsprechend erwärmen kann. Siehe Skizze 1 - 3.

Am Ein- und Auslaß sind entsprechende Anschlüsse zu montieren, die ein ordnungsgemäßes Anschließen ermöglicht.

Das Blech bzw. die Folie(n) kann durch geeignete Herstellungsverfahren vorgefertigte Kanäle für das Wärmeübertragungsmedium haben.

Das Metallblech bzw. die Folie(n) können zum Beispiel zum Schutz oder zur Farbgebung mit einer Schicht oder Film überzogen sein.

Durch geeignete Maßnahmen kann der Kollektor bzw. Absorber ohne Rahmen auf die Halterung montiert werden.

Eine Abdeckung durch eine Glasplatte bzw. Kunststoffolie ist nicht unbedingt erforderlich. Werden auf der Unterseite weitere Folien mit unterschiedlichen Ausformungen angebracht ( Form-, Material-, bzw. Kraftschlüssig) so können diese bei entsprechender Befüllung als Isolationsschicht dienen oder andere Konstruktiven Aufgaben (z.B. Stützen, Streben usw.) übernehmen.

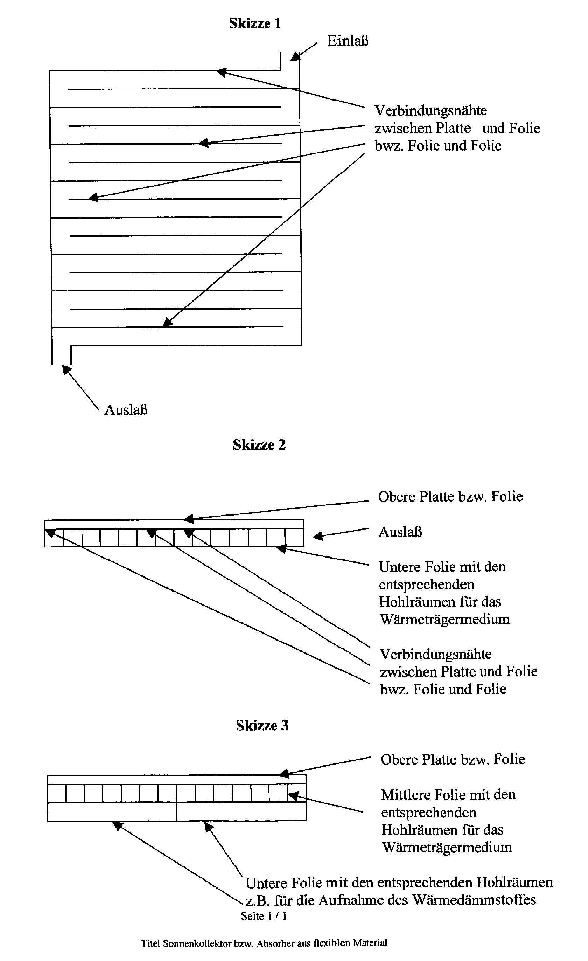

## Patentansprüche

1. Kollektor bzw. Absorber, **dadurch gekennzeichnet**, besteht aus mindestens einem Metallblech und mindestens aus einer Metallfolie oder mindestens zwei Metallfolien, diese sind Form-, Material-, bzw. Kraftschlüssig so miteinander Verbunden, daß in entsprechenden Zwischenräumen das Wärmeübertragungsmedium vom Einlaß zum Auslaß fließen kann und sich dabei entsprechend erwärmen kann.

2. Kollektor bzw. Absorber nach Anspruch 1, **dadurch gekennzeichnet, daß** das Metallblech bzw. die Folien mit zusätzlichen Material beschichtet sein kann.

3. Kollektor bzw. Absorber nach Anspruch 1 , **dadurch gekennzeichnet, daß** das Blech durch geeignete Herstellungsverfahren vorgefertigte Kanäle für das Wärmeübertragungsmedium haben kann.

4. Kollektor bzw. Absorber nach Anspruch 1, **dadurch gekennzeichnet, daß** dieser derart konstruiert bzw. gefertigt, daß er in einem entsprechenden Rahmen befestigt werden kann.

5. Kollektor bzw. Absorber nach Anspruch 1, **dadurch gekennzeichnet, daß** dieser derart konstruiert bzw. gefertigt, daß er ohne Rahmen mit entsprechenden Halterungsmaterialien moniert werden kann.

6. Kollektor bzw. Absorber nach Anspruch 1, **dadurch gekennzeichnet, daß** dieser derart konstruiert bzw. gefertigt, daß er ohne obere Abdeckplatte ( i.a. aus Glas) mit entsprechenden Halterungsmaterialien moniert werden kann.

7. Kollektor bzw. Absorber nach Anspruch 1, **dadurch gekennzeichnet, daß** dieser derart konstruiert bzw. gefertigt, daß weiter Folien am Kollektor bzw. Absorber angebracht werden können und durch füllen mit entsprechenden Materialien /Stoffen zur Wärmeisolierung genutzt werden.

8. Kollektor bzw. Absorber nach Anspruch 1, **dadurch gekennzeichnet, daß** dieser derart konstruiert bzw. gefertigt, daß weiter Folien am Kollektor bzw. Absorber angebracht werden können und weitere Konstruktive Funktionen ( Stabilisatoren, Stützen usw.) erfüllen können.
